# EUROPEAN PATENT APPLICATION

(11) **EP 4 556 394 A1**
(43) Date of publication of application: **21.05.2025**
(21) Application number: 23860609.9
(22) Date of filing: 07.06.2023
(51) Int. Cl.: B65D 43/16, B65D 53/02, A45D 34/00, A45D 40/22, C08L 23/06, C08L 23/12

(54) **CONTENTS CONTAINER**

(30) Priority: 29.08.2022 KR 20220108148
(71) Applicant: Yonwoo Co., Ltd., Incheon 22824 (KR)
(72) Inventor: JUNG, Seo Hui, Incheon 22824 (KR); HAM, Ki Young, Incheon 22824 (KR)
(74) Representative: Nederlandsch Octrooibureau
(86) International application number: PCT/KR2023/007747
(87) International publication number: WO 2024/048923

(57) **Abstract**

A contents container is provided according to an embodiment of the present invention. The container may comprise: a container part having an accommodation portion accommodating an impregnation member; a fixing part that is coupled along the circumference of the container part and prevents the impregnation member from escaping; and a cover part that is rotatably coupled to the container part and opens and closes the container part.

## Description

### Technical Field

The present invention relates to a container.

### Background Art

A variety of types of cosmetic contents have been launched, and to safely receive such cosmetic contents and more easily apply them to users, therefore, various cosmetic containers have been introduced.

In this case, it is very important that such cosmetic containers have good airtightness and sealing performance. If the cosmetic contents are not sealed stably, they may be dried in the containers and thus hardened or cracked, so that the contents may be varied in form or deteriorated in efficacy.

### Disclosure

### Technical Problem

It is an object of the present invention to provide a container that is capable of solving the above-mentioned problems.

The technical problems to be achieved through the present invention are not limited as mentioned above, and other technical problems not mentioned herein will be obviously understood by one of ordinary skill in the art through the following description.

### Technical Solution

A container is provided according to an embodiment of the present invention. The container may include: a container part having an accommodation portion adapted to receive an impregnation member therein; a fixing part coupled to the periphery of the container part to prevent the impregnation member from escaping from the container part; and a cover part rotatably coupled to the container part in such a way as to open and close the container part.

### Advantageous Effects of Invention

According to the present invention, the container is configured to allow the cover part to have the hook so that the cover part is rotatable with respect to the container part, and further, the container is configured to allow the container part to have the rotational shaft so that the rotational shaft is insertedly coupled to the hook, with ease, without the use of any metal hinge pin, thereby having no need to separate the hinge pin when the container is thrown away and recycled.

According to the present invention, further, the container is configured to allow the sealing protrusion formed along the periphery of the cover part to be brought into close contact with the container part when the cover part closes the container part, thereby improving a sealing efficiency through surface to surface sealing.

According to the present invention, furthermore, the container is configured to allow the container part to have the first air grooves so that at the time when the cover part is closed, the internal pressure of the container part is removed, and even in the state where the cover part is closed, the oil of the content is stored, whereas the moisture of the content is emitted to the outside, thereby preventing the container from being swollen. Even if the container part is made of the soft material, further, the container is prevented from being deformed in shape through the first air grooves.

According to the present invention, moreover, the cover part is made of the hard material, and the container part is made of the soft material, so that the cover part is softly closed, thereby improving a feeling of use and sealing performance.

According to the present invention, besides, the container is configured to have the second air grooves so that when the fixing part having the sealing sheet is coupled to the container part, the pressure in the container part is removed through the second air grooves, thereby preventing the sealing sheet from being convexly swollen or separated from the fixing part.

### Brief Description of Drawings

To allow the drawings as will be mentioned in the description of the present invention to be more sufficiently understood, the brief description of the drawings may be provided.
FIG. 1 is a perspective view showing a container according to an embodiment of the present invention.
FIG. 2 is an exploded perspective view showing the container according to the embodiment of the present invention.
FIG. 3 is an exploded sectional view showing the container according to the embodiment of the present invention.
FIG. 4 is a sectional view showing the container according to the embodiment of the present invention.
FIG. 5 is a perspective view showing a double container according to an embodiment of the present invention.
FIG. 6 is an exploded view showing the double container according to the embodiment of the present invention.

### Best Mode for Invention

A container is provided according to an embodiment of the present invention. The container may include: a container part having an accommodation portion adapted to receive an impregnation member therein; a fixing part coupled to the periphery of the container part to prevent the impregnation member from escaping from the container part; and a cover part rotatably coupled to the container part in such a way as to open and close the container part.

Further, the container part may be made of a relatively softer material than the cover part, and the cover part may be made of a relatively harder material than the container part.

Furthermore, the cover part may be made of polypropylene resin, and the container part may be made of polyethylene resin.

Besides, the container part may further include: an inner peripheral wall surrounding the accommodation portion; an outer peripheral wall spaced apart from the inner peripheral wall in an outward direction; and a bottom portion for supporting the inner peripheral wall and the outer peripheral wall, and a space between the inner peripheral wall and the outer peripheral wall may be open on top thereof in such a way as to allow the fixing part to be coupled to the inner peripheral wall and allow the cover part to be coupled to the outer peripheral wall.

Further, the outer peripheral wall may have at least one or more first air grooves along the periphery thereof.

Furthermore, the outer peripheral wall may be higher than the inner peripheral wall so that an interference between the fixing part coupled to the inner peripheral wall and the cover part coupled to the outer peripheral wall may be prevented from occurring.

Besides, the container part may include: a rotational shaft located on the outside thereof to rotate the cover part; and a support for connecting the rotational shaft and the container part to each other, and the cover part may include: a flat blocking portion; and a hook extending from the underside of the blocking portion in such a way as to be open on an outside area thereof and rotatably coupled to the rotational shaft.

Moreover, the fixing part may include: a peripheral portion adapted to be coupled to the container part; and a locking portion protruding inward from top of the peripheral portion in such a way as to prevent the impregnation member from escaping from the container part.

Further, the container may include a sealing sheet for sealing an open area of the fixing part, and the peripheral portion of the fixing part may have at least one or more second air grooves.

A double container is provided according to an embodiment of the present invention. The double container may include: the container according to the embodiment of the present invention; an outer container part for receiving the container part of the container; and an outer cover part for opening and closing the outer container part.

### Mode for Invention

Hereinafter, example embodiments will be described with reference to the accompanying drawings. In addition, a device of the present invention and a method for using the device will be explained in detail with reference to the attached drawings. In the drawings, the same reference numerals or symbols are parts or components performing the same functions. Further, top, bottom, left and right directions as will be described below are determined with reference to the drawings, and accordingly, the scope of the present invention is not necessarily restricted to the corresponding directions.

When it is said that one element is described as being "connected" or "coupled" to the other element, one element may be directly connected or coupled to the other element, but it should be understood that another element may be present between the two elements. In contrast, when it is said that one element is described as being "directly connected" or "directly coupled" to the other element, it should be understood that another element is not present between the two elements. In the description, when it is said that one portion is described as "includes" any component, one element further may include other components unless no specific description is suggested. Terms, such as first, second, A, B, (a), and (b) may be used to describe various elements, but the elements should not be restricted by the terms. The terms are used to only distinguish one element from the other element.

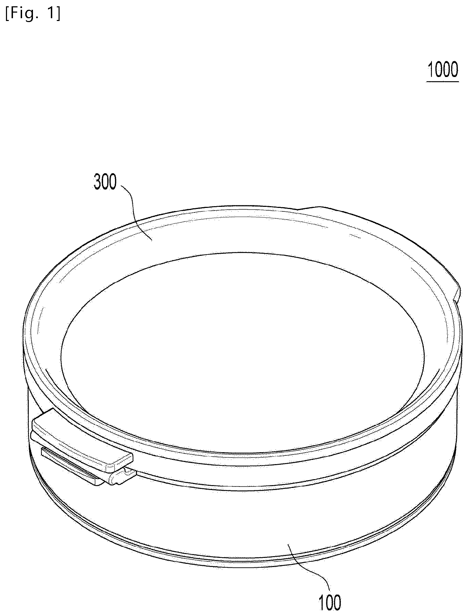

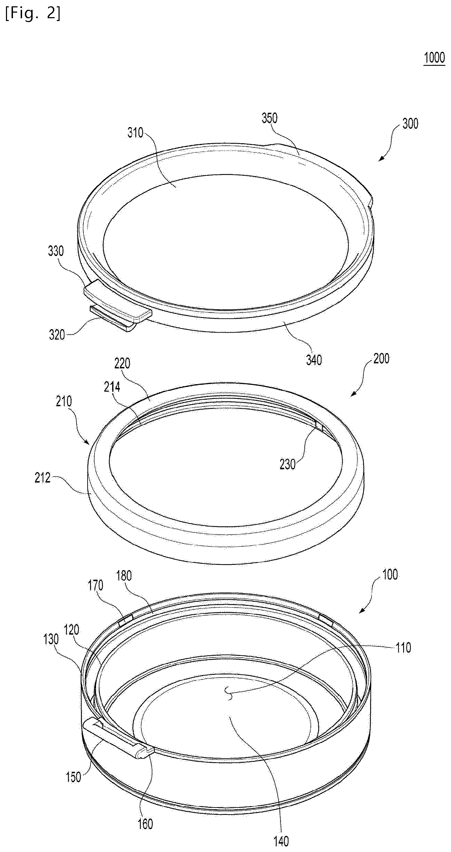

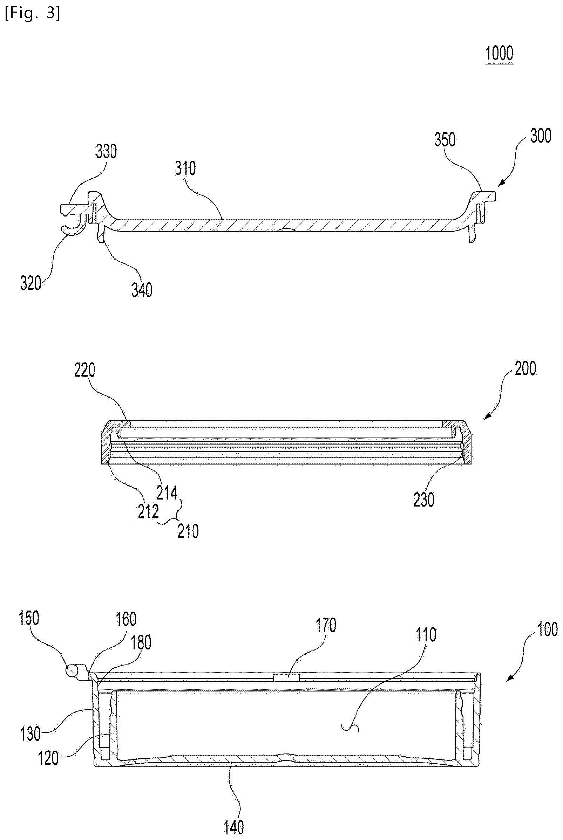

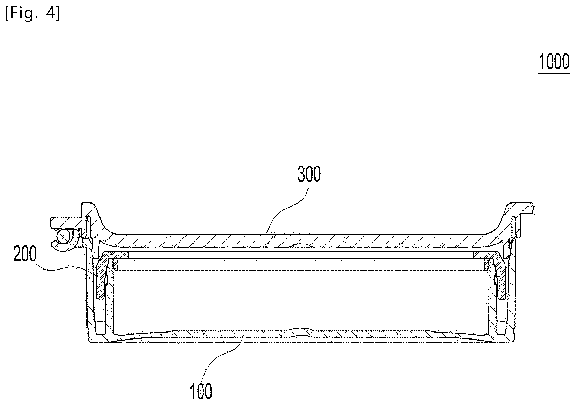

FIG. 1 is a perspective view showing a container according to an embodiment of the present invention, FIG. 2 is an exploded perspective view showing the container according to the embodiment of the present invention, FIG. 3 is an exploded sectional view showing the container according to the embodiment of the present invention, and FIG. 4 is a sectional view showing the container according to the embodiment of the present invention.

Referring to FIGs. 1 to 4, a container 1000 according to an embodiment of the present invention largely includes a container part 100, a fixing part 200, and a cover part 300.

The container part 100 has an accommodation portion 110 formed at the inside thereof to store a given content. In this case, the content is, for example, a liquid, gel or powder cosmetic content. For example, the content may be lotion, milk lotion, moisture lotion, nutrition lotion, skin lotion, skin softer, skin toner, astringent, massage cream, nutrition cream, whitening essence, tone-up cream, sunblock, sun cream, sun milk, BB cream, base, foundation, CC cream, concealer, blusher, shade, eyeshadow, eyebrow, eye cream, primer, etc. However, the content may not be limited thereto, and therefore, the content may include different formulations or types of cosmetics, medicines, foods, compounds, or compositions whose sealing is required.

According to the embodiment of the present invention, the container part 100 further includes an inner peripheral wall 120 surrounding the accommodation portion 110, an outer peripheral wall 130 spaced apart from the inner peripheral wall 120 in an outward direction; and a bottom portion 140 for supporting the inner peripheral wall 120 and the outer peripheral wall 130. In this case, a space between the inner peripheral wall 120 and the outer peripheral wall 130 is open on top thereof and closed on bottom thereof by means of the bottom portion 140. Further, the fixing part 200 is coupled to the inner peripheral wall 120, and the cover part 300 is coupled to the outer peripheral wall 130, while closing the accommodation portion 110. To do this, the inner peripheral wall 120 and/or the outer peripheral wall 130 may be coupled to the fixing part 200 and the cover part 300 by means of protrusions and/or grooves.

According to the embodiment of the present invention, the top open between the inner peripheral wall 120 and the outer peripheral wall 130 is sealed by means of the fixing part 200 and the cover part 300. To do this, the fixing part 200 (particularly, an outer peripheral portion 212) and the cover part 300 (particularly, a sealing protrusion 340) come into close contact with each other.

According to the embodiment of the present invention, the outer peripheral wall 130 is higher than the inner peripheral wall 120. That is, this aims to prevent an interference between the fixing part 200 coupled to the inner peripheral wall 120 and the cover part 300 coupled to the outer peripheral wall 130 from occurring.

According to the embodiment of the present invention, the container part 100 further includes a rotational shaft 150 and a support 160. The rotational shaft 150 is located on the outside of the container part 100 (particularly, the outer peripheral wall 130), and as a hook 320 of the cover part 300 is fittedly coupled to the rotational shaft 150, the cover part 300 is rotatable. Further, the support 160 connects the rotational shaft 150 and the container part 100 (particularly, the outer peripheral wall 130) to each other.

According to the embodiment of the present invention, the support 160 extends outward from the outer peripheral wall 130 in such a way as to be bent upward from at least a given area thereof. Through the outward extending portion and the upward bent portion of the support 160, the rotational shaft 150 is spaced apart from the outer peripheral wall 130 in horizontal and vertical directions, thereby ensuring a sufficient space for rotating the cover part 300.

According to the embodiment of the present invention, the outer peripheral wall 130 has at least one or more first air grooves 170 along the periphery thereof. If the cover part 300 is closed to seal the container part 100, the air existing in the container part 100 is emitted to the outside through the first air grooves 170, thereby preventing the pressure in the container part 100 from being removed.

According to the embodiment of the present invention, the outer peripheral wall 130 has at least one sealing groove 180 along the periphery thereof. If the container part 100 is closed by the cover part 300, the sealing protrusion 340 of the cover part 300 is inserted into the sealing groove 180. The sealing protrusion 340 and the sealing groove 180 are rigidly brought into close contact with each other along the outer peripheral wall 130, thereby allowing the container part 100 to be kept sealed.

According to the embodiment of the present invention, the first air grooves 170 are formed above the sealing groove 180. For example, the first air grooves 170 are spaced apart from one another above the sealing groove 180, and otherwise, they may extend upward from at least one or more areas of the sealing groove 180. As a result, the compression of the air (that is, the internal pressure) in the container part 100 is effectively prevented from occurring when the container part 100 is closed, thereby allowing the container part 100 to be sealed easily and stably by means of the cover part 300.

The fixing part 200 is coupled to the periphery of the container part 100 (particularly, the inner peripheral wall 120) and serves to prevent an impregnation member from escaping from the container part 100.

According to the embodiment of the present invention, the fixing part 200 includes a peripheral portion 210 and a locking portion 220. The peripheral portion 210 is coupled to the container part 100, and the locking portion 220 protrudes inward from top of the peripheral portion 210 to prevent the impregnation member from escaping from the container part 100.

According to the embodiment of the present invention, the peripheral portion 210 consists of an outer peripheral portion 212 and an inner peripheral portion 214. The inner peripheral wall 120 is inserted into a space between the outer peripheral portion 212 and the inner peripheral portion 214. In detail, the outer peripheral portion 212 comes into close contact with the outer periphery of the inner peripheral wall 120, and the inner peripheral portion 214 comes into close contact with the inner periphery of the inner peripheral wall 120. In this case, the inner outer peripheral portion 212 and/or the locking portion 220 pressurize or support at least one area of the impregnation member located in the accommodation portion 110, thereby preventing the impregnation member from escaping from the container part 100.

According to the embodiment of the present invention, the fixing part 200 further has at least one or more second air grooves 230 along the periphery thereof. The fixing part 200 may have a sealing sheet, and in this case, if the fixing part 200 is coupled to the container part 100, the air existing in the container part 100 is emitted through the second air grooves 230, thereby removing pressure from the container part 100 and preventing the sealing sheet from being deformed in shape. For example, the second air grooves 230 are formed on the peripheral portion 210, particularly, the outer peripheral portion 212. However, they may not be limited thereto.

The cover part 300 is rotatably coupled to the container part 100 to open and close the container part 100. In detail, the cover part 300 includes at least one of a cover body 310, the hook 320, a blocking portion 330, the sealing protrusion 340, and a handle 350.

According to the embodiment of the present invention, the cover body 310 rotates to open or close the container part 100 and provides a space in which the hook 320 and the blocking portion 330 are formed and coupled. According to the embodiment of the present invention, a top surface of the cover body 310 is concavely formed on at least a given area thereof to provide an accommodation space. A content and an application member (for example, a puff, a brush, etc.) are received in the accommodation space. The content received in the cover body 310 may be the same as that in the container part 100 or different from that in the container part 100.

According to the embodiment of the present invention, the hook 320 is formed on a given outer periphery of the cover part 300 (particularly, the cover body 310) in such a way as to be open on a given outside area thereof, and the hook 320 is coupled to the rotational shaft 150 of the container part 100 to allow the cover part 300 to be rotatable with respect to the container part 100.

According to the embodiment of the present invention, the blocking portion 330 extends outward from the cover part 300 (particularly, the cover body 310) and has the shape of a flat plate on at least a portion thereof. In this case, the hook 320 extends from the underside of the blocking portion 330. In detail, the blocking portion 330 has a size capable of blocking the hook 320 extending from the underside thereof and the rotational shaft 150 of the container part 100 to prevent the hook 320 from being exposed to the outside and to avoid foreign substances from being caught into a space between the hook 320 and the rotational shaft 150.

According to the embodiment of the present invention, the sealing protrusion 340 is formed along the cover part 300 (particularly, the cover body 310) in such a way as to extend downward therefrom. If the container part 100 is closed by the cover part 300, the sealing protrusion 340 comes into close contact with the container part 100 (particularly, the outer peripheral wall 130) and thus seals the container part 100.

According to the embodiment of the present invention, the handle 350, which is designed to be held by a user, protrudes outward from the cover part 300 (particularly, the cover body 310). As the cover part 300 rotates through the handle 350 held by the user, the container part 100 can be easily open and closed. To allow the cover part 300 to rotate easily, the handle 350 is desirably located on the opposite side to the hook 320, but of course, it may not be limited thereto.

According to the embodiment of the present invention, the container part 100 and the cover part 300 are made of different materials from each other. In detail, the container part 100 is made of a relatively softer material than the cover part 300, and the cover part 300 is made of a relatively harder material than the container part 100.

According to the embodiment of the present invention, the container part 100 and/or the cover part 300 are made of at least one selected from the group consisting of polypropylene (PP) resin, polyethylene (PE) resin, thermoplastic elastomer (TPE) resin, and thermoplastic rubber (TPR) resin. The material of the container part 100 is relatively softer than that of the cover part 300, and the material of the cover part 300 is relatively harder than that of the container part 100.

According to the embodiment of the present invention, the material of the container part 100 is relatively softer than that of the cover part 300, and the material of the cover part 300 is relatively harder than that of the container part 100. To do this, the cover part 300 is made of the polypropylene resin, and the container part 100 is made of the polyethylene resin.

For example, the polyethylene resin includes low-density polyethylene (LDPE), linear low-density polyethylene (LLDPE), medium density polyethylene (MDPE), high-density polyethylene (HDPE), ultra-high molecular weight polyethylene (UHMWPE), crosslinked polyethylene (XLPE), chlorinated polyethylene (CPE), and combinations thereof, and the polypropylene (PP) resin includes HOMO PP, BLOCK PP, RANDOM PP, TER PP, and combinations thereof. However, they may not be limited thereto.

According to the embodiment of the present invention, the container part 100 is made of at least two of the low-density polyethylene (LDPE), the linear low-density polyethylene (LLDPE), and the high-density polyethylene (HDPE). For example, the container part 100 is made of the linear low-density polyethylene (LLDPE) and the high-density polyethylene (HDPE). For example, the container part 100 is made of 1.5 to 4 parts by weight of the linear low-density polyethylene (LLDPE) and 7 to 8 parts by weight of the high-density polyethylene (HDPE). In this case, softness and stiffness are appropriately mixed to improve the feeling of use and the sealing force thereof. Further, the cover part 300, which is harder than the container part 100, is made of the polypropylene (PP) resin. However, the cover part 300 may not be limited thereto.

According to the embodiment of the present invention, the container 1000 further includes the impregnation member. The impregnation member is located inside the container part 100 (particularly, the accommodation portion 110) and impregnated with the content. To do this, the impregnation member is, for example, made of a porous material so that the pores formed therein are impregnated with the content, and if an external force is applied, the impregnated content is discharged from the impregnation member.

According to the embodiment of the present invention, the container 1000 further includes the sealing sheet (not shown). The sealing sheet, which is adapted to seal the content accommodated in the container part 100, is coupled to the fixing part 200 to block the open area of the fixing part 200. For example, the sealing sheet is made of a sheet of paper, a film, etc., and an adhesive is applied to the periphery of the sealing sheet to allow the sealing sheet to be coupled to the fixing part 200, particularly, the top end periphery of the locking portion 220. The sealing sheet is removed to use the content.

The container 1000 as shown in FIGs. 1 to 4 is just exemplary, and therefore, the container 1000 may be freely configured according to embodiments of the present invention.

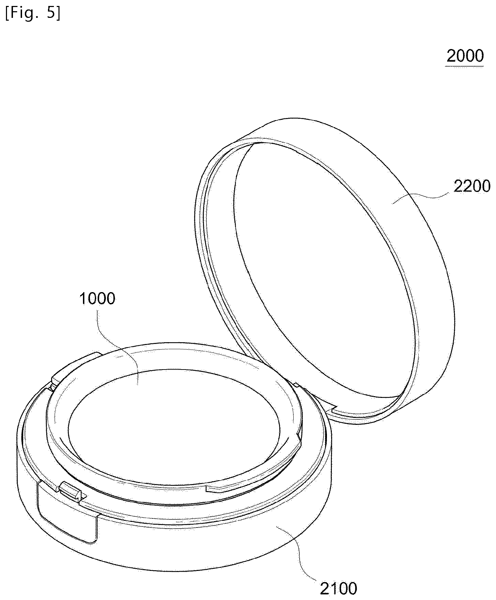

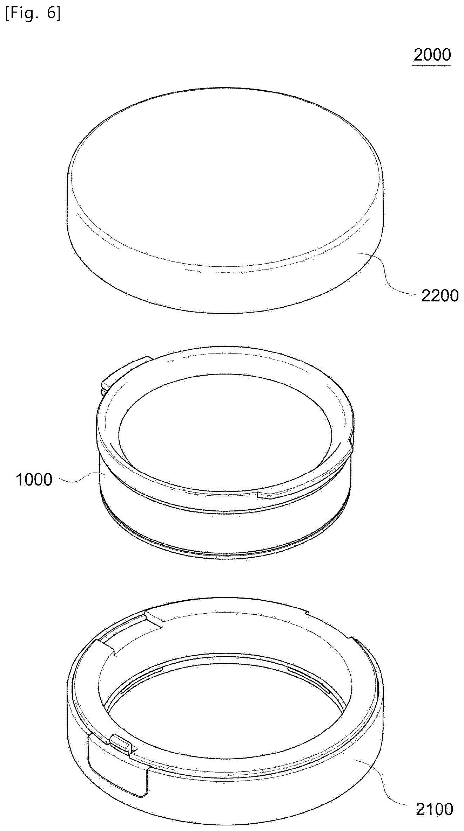

FIG. 5 is a perspective view showing a double container according to an embodiment of the present invention, and FIG. 6 is an exploded view showing the double container according to the embodiment of the present invention.

Referring to FIGs. 5 and 6, a double container 2000 includes the container 1000, an outer container part 2100, and an outer cover part 2200.

The outer container part 2100 has an accommodation space formed therein in such a way as to receive the container part 100 of the container 1000. To do this, the accommodation space of the outer container part 2100 has the shape corresponding to the outer shape of the container part 100 and is coupled to the container part 100 by means of fixing protrusions and/or grooves.

According to the embodiment of the present invention, if the container part 100 of the container 100 is made of a soft material, the container part 100 is received in the outer container part 2100 made of a relatively harder material than the container part 100, so that the container part 100 is prevented from being deformed in shape or moving.

According to the embodiment of the present invention, the outer container part 2100 is formed concavely on at least a portion of top end periphery thereof. Within the concave area of the outer container part 2100 are located the hook 320, the blocking portion 330, the rotational shaft 150, and the support 160 of the container 1000. Further, top end peripheries close to the concave area of the outer container part 2100 are flat so that the flat blocking portion 330 is located continuously to the flat top end peripheries.

The outer cover part 2200 is rotatably connected to the outer container part 2100 to open and close the outer container part 2100. That is, the container part 100 of the container 1000 is primarily sealed with the cover part 300 and secondarily sealed with the outer cover part 2200.

For example, the outer cover part 2200 is connected to one side of the outer container part 2100 by means of a hinge so that it rotates by means of the hinge to open and close the outer container part 2100.

Further, the outer container part 2100 and the outer cover part 2200 have locking portions located on the positions corresponding to each other to keep the sealed state of the outer cover part 2200.

The double container 2000 as shown in FIGs. 5 and 6 is just exemplary, and therefore, the double container 2000 may be freely configured according to embodiments of the present invention.

Hereinafter, containers according to a first embodiment of the present invention and comparison examples through experiments will be explained in detail. However, they are just exemplary, and therefore, the scope of the present invention may not be limited by them.

The container part and the cover part were made of materials as suggested in Table 1, so that the containers having such container parts and cover parts were made. According to the first embodiment of the present invention, the container had the cover part made of polypropylene and the container part made of polyethylene. According to the first comparison example, the container had the cover part and the container part made of polypropylene. According to the second and third comparison examples, the containers had the cover parts made of polyethylene and the container parts made of polyethylene and polypropylene.

**[Table 1]**

| | Material of cover part | Material of container part | Feeling of use | Sealing performance |
|---|---|---|---|---|
| First embodiment of the invention | PP | PE | High | High |
| First comparison example | PP | PP | Low | Low |
| Second comparison example | PE | PE | High | Medium |
| Third | PE | PP | Medium | Low |
| comparison example | | | | |

According to the first embodiment of the present invention, the cover part softly closed the container part, and as the container part and the cover part were firmly brought into close contact with each other, further, sealing performance was improved.

Unlike this, according to the first comparison example, as the cover part and the container part were made of the hard material, the cover part stiffly opened and closed the container part, thereby making a user have a bad feeling of use. Even when the cover part closed, further, it was not brought into close contact with the container part well, thereby causing low sealing performance.

According to the second comparison example, as the cover part and the container part were made of the soft material, the cover part softly opened and closed the container part, but the cover part and the container part were deformed in shape, so that the cover part was not closed well and thus bent.

According to the third comparison example, as the cover part was made of the soft material and the container part was made of the hard material, the cover part softly opened and closed the container part, but it was deformed in shape. Contrarily, as the container part was made of the hard material, the cover part was not closed well, and even when the cover part was closed, it was not brought into close contact with the container part well.

As mentioned above, the preferred embodiment of the present invention has been disclosed in the specification and drawings. Therefore, persons skilled in the relevant art can appreciate that many modifications and variations are possible in light of the above teachings. It is therefore intended that the scope of the invention be limited not by this detailed description, but rather by the claims appended hereto.

| | | | |
|---|---|---|---|
| 1000 | Container | 100 | Container part |
| 110 | Accommodation portion | 120 | Inner peripheral wall |
| 130 | Outer peripheral wall | 140 | Bottom portion |
| 150 | Rotational shaft | 160 | Support |
| 170 | First air groove | 180 | Sealing groove |
| 200 | Fixing part | 210: | Peripheral portion |
| 212 | Outer peripheral portion | 214 | Inner peripheral portion |
| 220 | Locking portion | 230 | Air groove |
| 300 | Cover part | 310 | Cover body |
| 320 | Hook | 330 | Blocking portion |
| 340 | Sealing protrusion | 350 | Handle |
| 2000 | Double container | 2100 | Outer container part |
| 2200 | Outer cover part | | |

## Claims

1. A container comprising:
a container part having an accommodation portion adapted to receive an impregnation member therein; a fixing part coupled to the periphery of the container part to prevent the impregnation member from escaping from the container part; and a cover part rotatably coupled to the container part in such a way as to open and close the container part.

2. The container according to claim 1, wherein the container part is made of a relatively softer material than the cover part, and the cover part is made of a relatively harder material than the container part.

3. The container according to claim 2, wherein the cover part is made of polypropylene resin, and the container part is made of polyethylene resin.

4. The container according to claim 1, wherein the container part further comprises: an inner peripheral wall surrounding the accommodation portion; an outer peripheral wall spaced apart from the inner peripheral wall in an outward direction; and a bottom portion for supporting the inner peripheral wall and the outer peripheral wall, and a space between the inner peripheral wall and the outer peripheral wall is open on top thereof in such a way as to allow the fixing part to be coupled to the inner peripheral wall and allow the cover part to be coupled to the outer peripheral wall.

5. The container according to claim 4, wherein the outer peripheral wall has at least one or more first air grooves along the periphery thereof.

6. The container according to claim 4, wherein the outer peripheral wall is higher than the inner peripheral wall so that an interference between the fixing part coupled to the inner peripheral wall and the cover part coupled to the outer peripheral wall is prevented from occurring.

7. The container according to claim 1, wherein the container part comprises: a rotational shaft located on the outside thereof to rotate the cover part; and a support for connecting the rotational shaft and the container part to each other, and the cover part comprises: a flat blocking portion; and a hook extending from the underside of the blocking portion in such a way as to be open on an outside area thereof and rotatably coupled to the rotational shaft.

8. The container according to claim 1, wherein the fixing part comprises: a peripheral portion formed along the perimeter of the container part; and a locking portion protruding inward from top of the peripheral portion in such a way as to prevent the impregnation member from escaping from the container part.

9. The container according to claim 8, further comprising a sealing sheet for sealing an open area of the fixing part, the peripheral portion of the fixing part having at least one or more second air grooves.
